# EUROPÄISCHE PATENTSCHRIFT

(11) **EP 3 724 512 B1**
(45) Veröffentlichungstag und Bekanntmachung des Hinweises auf die Patenterteilung: **23.10.2024**
(21) Anmeldenummer: 18825624.2
(22) Anmeldetag: 13.12.2018
(51) Int. Cl.: F04D 29/42, F04D 29/44, F04D 29/54

(54) **GEHÄUSE HERGESTELLT IN EINEM ARBEITSGANG**
HOUSING PRODUCED IN ONE WORKING STEP
BOÎTIER FABRIQUÉ EN UNE SEULE OPÉRATION

(30) Priorität: 13.12.2017 DE 102017011504; 13.12.2017 DE 102017011503
(43) Veröffentlichungstag der Anmeldung: 21.10.2020
(73) Patentinhaber: ebm-papst Mulfingen GmbH & Co. KG, 74673 Mulfingen (DE)
(72) Erfinder: GEBERT, Daniel, 74613 Öhringen (DE); HAAS, Werner, 78655 Dunningen (DE); SIEGER, Tobias, 78187 Geisingen (DE); USSELMANN, Eugen, 78073 Bad Dürrheim (DE); LAUFER, Wolfgang, 78733 Aichhalden (DE)
(74) Vertreter: Staeger & Sperling Partnerschaftsgesellschaft mbB
(86) Internationale Anmeldenummer: PCT/EP2018/084811
(87) Internationale Veröffentlichungsnummer: WO 2019/115717

(56) Entgegenhaltungen:
- EP-A2- 1 619 393
- WO-A1-2015/075103
- WO-A1-2017/026143
- DE-A1- 102012 000 376
- US-A1- 2006 039 784
- US-A1- 2014 186 198

## Beschreibung

Die Erfindung betrifft ein Gehäuse für einen Ventilator, das in einem Arbeitsgang hergestellt ist.

In diversen Anwendungen sind hohe Drehzahlen erforderlich, womit sich hohe Anforderungen an die mechanische Festigkeit der Schaufelräder eines Ventilators ergeben.

Ein Lüfter bzw. Ventilator enthält jeweils eine Mehrzahl von um eine Welle angeordnete Laufradflügel. An solche Laufradflügel sind hohe Anforderungen gestellt. Hinsichtlich ihrer dynamisch-mechanischen Eigenschaften sollen die Ventilatoren im Drehzahlbereich von hohen Drehzahlen arbeiten können. Somit treten am Propellerflügel im Betrieb durch Zentrifugalkräfte verursachte Zugspannungen und durch die Luftförderung erzeugte Biegespannungen auf.

Es ist bekannt, Ventilatorlaufräder aus faserverstärktem Kunststoff, bsp. aus glasfaserverstärktem Polyester oder Polyamid, im Laminierverfahren herzustellen. Dazu werden die Propollerflügel mehrteilig, vorzugsweise zweiteilig als jeweils untere und obere Halbschalen mittels Handlamination in Aussenformen gefertigt. Die beiden Halbschalen werden danach z. B. unter Ausbildung einer Hohlkammer mittels Kleben und Überlaminieren der Fügenaht zu einem Propellerffügel gefügt.

Diese Technik weist den Nachteil auf, dass die Wanddicken sowie der Fasergehalt durch die Handlamination nicht genau reproduzierbar sind. Die Folge sind Gewichtsunterschiede zwischen den einzelnen Propollerflügeln, was zu Unwuchten im Propeller führt, die wiederum durch aufwändige Massnahmen beseitigt werden müssen.

Weitere bekannte Verfahren betreffen das Herstellen mehrere Bauteile, die zu einem Ventilatorrad zusammengefügt werden. Besonders bei komplex geformten Ventilatorrädern ist es üblich diese aus einer Mehrzahl von weniger komplexen Einzelkomponenten zu fertigen und zu einer Baugruppe durch bekannte Montageverfahren zu einem Bauteil zusammen zu fügen. Diese bekannten Maßnahmen zeigen diverse Nachteile (Bauteilanzahl, Montageaufwand, hohe Montagekosten, Werkzeugvielfalt, ...), die es zu vermeiden gilt.

Druckschriftlicher Stand der Technik im vorliegenden technischen Gebiet ist in den Dokumenten US 2006/039 784 A1, WO 2015/075 103 A1, WO 2017/026 143 A1, DE 10 2012 000 376 A1, US 2014/186 198 A1 und EP 1 619 393 A2 offenbart.

Es ist die Aufgabe der vorliegenden Erfindung, eine Lösung zur Herstellung eines Gehäuses eines Ventilators bereitzustellen, die kostengünstig realisierbar ist und mit der sich verbesserte mechanische Eigenschaften erzielen lassen. Diese Aufgabe wird durch folgende Maßnahmen gelöst, die bevorzugt auch kummulativ kombiniert werden können.

Eine erste Maßnahme ist die Lösung die Konstruktion des Gehäuses für den Ventilator so zu gestalten, dass sich das Gehäuse in einem einzigen Arbeitsschritt, nämlich einem Spritzgussverfahren einstückig herstellen lässt.

Eine weitere bevorzugte Maßnahme ist darin zu sehen, die Angusseite für den Anguss beim Spritzguss verdickt auszuführen.

Eine weitere konstruktive Verbesserung wird darin gesehen, dass die Leitschaufels mit möglichst großen Radien im Übergang an der Innenscheibe oder Bodenscheiben verbunden sind.

Erfindungsgemäß wird hierzu ein Gehäuse vorgeschlagen, wobei das Gehäuse eine Deckscheibe mit einer zylindrischen Wand und eine zentrale Aufnahme mit einer Nabe zur Lagerung eines Ventilators mit einem Diagonal-ventilatorrad aufweist, wobei um die Nabe mehrere dreidimensional gekrümmte Luftleitsschaufeln angeordnet sind und die Luftleitsschaufeln materialschlüssig mit der zylindrischen Wand verbunden sind und hierzu das Gehäuse in einem Arbeitsschritt hergestellt ist.

Besonders bevorzugt ist es, wenn das Gehäuse dabei insgesamt sowohl einstückig als auch einteilig ausgebildet ist.

Weiter vorteilhaft ist es, wenn der eine Arbeitsschritt zur ein Spritzgussverfahren darstellt, bei dem von einer Angussseite (A) zu einer Waschbrettseite (W) das Gehäuse in einem Spritzvorgang in einem Spritzgusswerkzeug hergestellt wird. Weiter vorteilhaft ist es dabei, wenn angusseitig am Gehäuse eine Materialverdickung vorgesehen ist.

In einer vorteilhaften Ausführungsform der Erfindung ist vorgesehen, dass die Luftleitschaufeln mit möglichst großen Radien im Übergang an der Innenwand der zylindrischen Wand verbunden sind.

Die zentrale Aufnahme des Gehäuses besitzt erfindungsgemäß ferner einen Schaftboden und an der schaftseitig, somit an der zum Ventilatorrad zugewandten Seite ist dieser mit einer unsymmetrisch ausgeführten Rippung versehen, ausgebildet aus mehreren sternförmig angeordneten Stegen oder Rippen, die auch die Festigkeit des Ventilatorrads erhöhen. Durch die asymmetrische Anordnung der Stege hat sich ein günstiges Fließverhalten im Spritzgusswerkzeug gezeigt.

In einer weiteren vorteilhaften Ausführungsform der Erfindung ist vorgesehen, dass die mehren Rippen in ihrer Anzahl ungleichmäßig gegenüber einer gedachten mittleren Trennlinie quer durch das Gehäuse diametral gegenüberliegend auf beiden Seiten der gedachten mittleren Trennlinie angeordnet sind, wobei bevorzugt auf einer ersten Seite (angussseitig) drei Rippen und auf der diametral gegenüberliegenden Seite (waschbrettseitig) zwei Rippen vorgesehen sind.

Mit Vorteil erfolgt die Herstellung so, dass angussseitig am Anguss und diametral gegenüberliegend (somit auf der Waschbrettseite W) einmal eine Verdickung und einmal ein Teilungssprung vorgesehen sind.

Ferner ist mit Vorteil vorgesehen, dass im Schaftboden zwei fensterartige Öffnungen in Bereichen ohne Rippung vorgesehen sind, d. h. zwischen den Rippen.

In einer weiteren vorteilhaften Ausführungsform der Erfindung ist vorgesehen, dass am Schaftboden eine zylindrische, um die Nabe herum verlaufende Wandung vorgesehen ist und die Luftleitschaufeln mit einem Verbindungsabschnitt an dieser Wandung einstückig und einteilig verbunden sind.

Bevorzugt ist dabei eine Ausgestaltung, bei der am Schaftboden ferner gebogene Rippen oder Stege vorgesehen sind, die zumindest abschnittsweise radial um die Nabe herum angeordnet sind und die zuvor beschriebenen radial angeordneten Rippen (die sternförmig angeordnet sind), vorzugsweise in etwa in deren Mitte bezogen auf deren Längserstreckung kreuzen.

Ein weiterer Aspekt der vorliegenden Erfindung betrifft das Herstellverfahren zum Herstellen eines wie zuvor beschriebenen Gehäuses in einem Arbeitsschritt im Spritzgussverfahren in einem Spritzgusswerkzeug.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine perspektivische Ansicht eines Ausführungsbeispiels eines (in einem Arbeitsschritt) einstückig hergestellten Gehäuses zur Aufnahme eines Diagonalventilators,
- Fig. 2: eine perspektivische Ansicht des Ausführungsbeispiels eines (in einem Arbeitsschritt) einstückig hergestellten Gehäuses gemäß Figur 1 von der gegenüberliegenden Perspektive,
- Fig. 3: eine Aufsicht auf die Ansicht aus Figur 2,
- Fig. 4: eine schematische Ansicht des Spritzgussverlaufes von der Angussseite bis zur Teilung an der Waschbrettseite und
- Fig. 5: eine perspektivische Ansicht des Gehäuses 10 mit einem eingesetzten Ventilator.

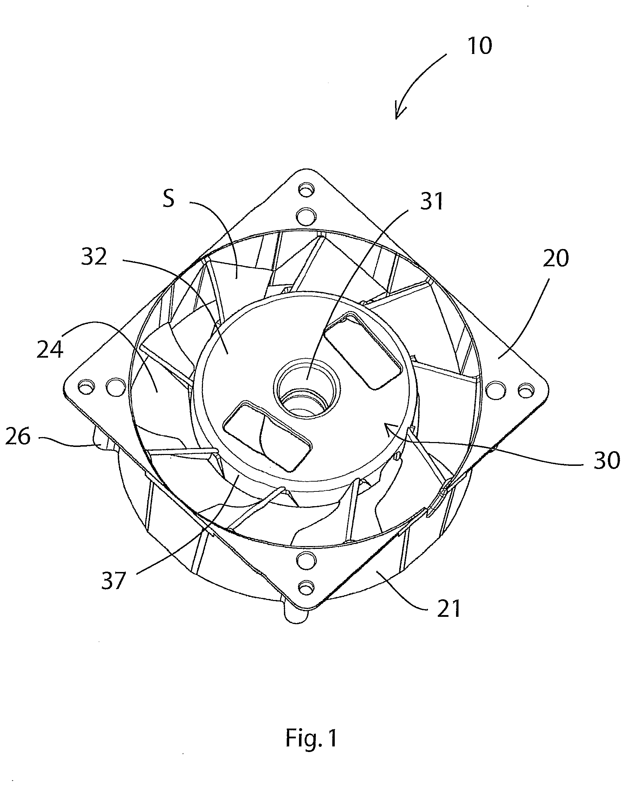

Im Folgenden wird die Erfindung mit Bezug auf die Figuren 1 bis 5 näher erläutert, wobei gleiche Bezugszeichen gleiche funktionale und/oder strukturelle Merkmale darstellen.

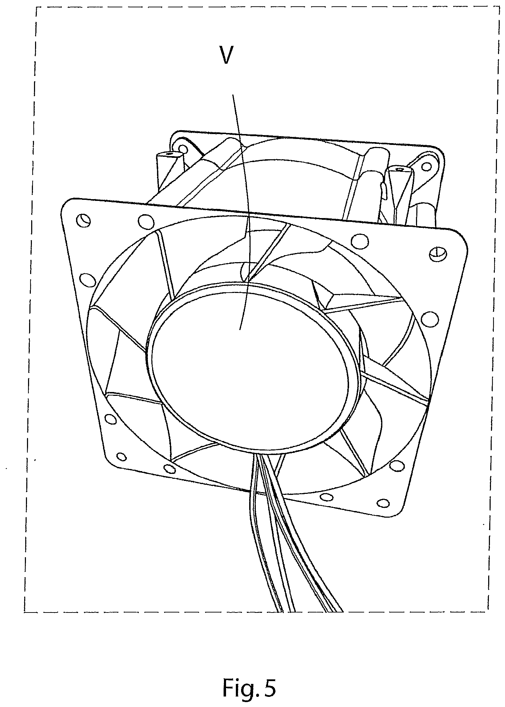

Die Figur 1 zeigt eine perspektivische Ansicht eines Ausführungsbeispiels eines (in einem Arbeitsschritt) einstückig hergestellten Gehäuses 10 zur Aufnahme eines Diagonalventilators, wie dies in der Figur 5 zu erkennen ist.

Das Gehäuse 10 besitzt eine mit einer Öffnung 24 versehene Deckscheibe 20 mit einer zylindrischen Wand 21, die sich in einer Axialrichtung von der Deckscheibe 20 erstreckt. Die Deckscheibe hat hier ferner die Funktion als Flanschverbindung zu dienen, um mit einem Ventilator V, wie in der Figur 5 gezeigt, in eine Montageverbindung gebracht zu werden. Hierzu besitzt die Deckscheibe 20 an den Ecken Flanschverbinder 26.

Ferner besitzt das Gehäuse 10 eine zentrale Aufnahme 30 mit einer Nabe 31 zur Lagerung eines Ventilators, der ein Diagonalventilatorrad aufweist. Die Nabe 31 ist hier als zylindrische geformte Hülse am Schaftboden 32 verbunden.

Um die Nabe 30 herum und beabstandet zu dieser sind mehrere dreidimensional gekrümmte Luftleitschaufeln S angeordnet. Diese Luftleitschaufeln S sind materialschlüssig mit der zylindrischen Wand 37 der zentralen Aufnahme 30 verbunden.

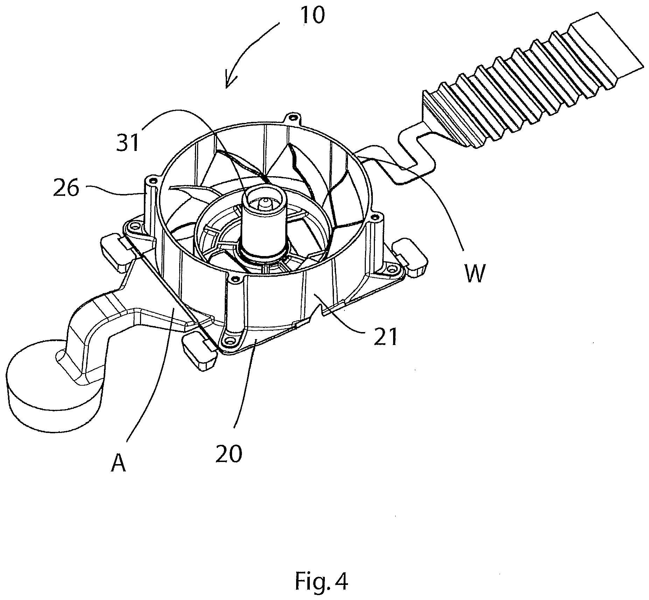

Die Prozessrichtung beim Spritzen ist gut aus der Figur 4 ersichtlich, der schematisch den einen Arbeitsschritt im Spritzgussverfahren darstellen soll, wobei über einen Anguss von einer Angussseite A zu einer Waschbrettseite W das Gehäuse 10 in einem Spritzvorgang in einem Spritzgusswerkzeug hergestellt wird. Der Kanalverlauf im Bereich nach dem Abgang W zur Waschbrettseite des Spritzgusswerkzeugs ist gekrümmt ausgebildet.

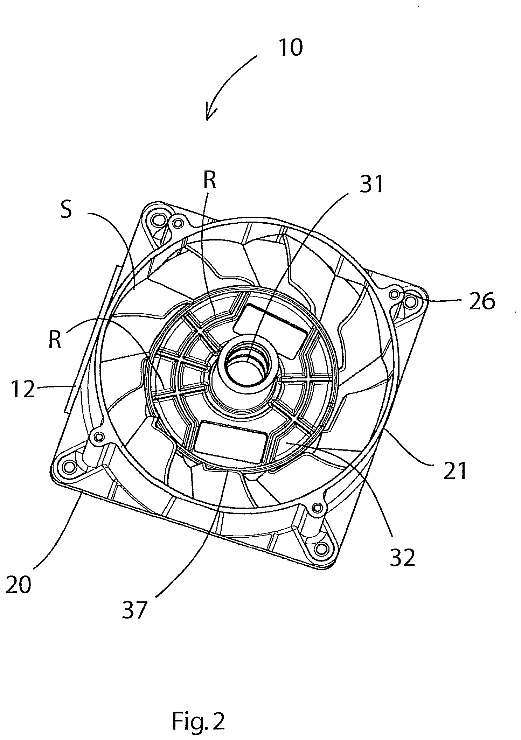

Im Bereich des Anschlusses des Angusses an der Angussseite A findet sich somit angusseitig am Gehäuse 10 eine Materialverdickung 12, wie diese schematisch in der Figur 2 angedeutet ist.

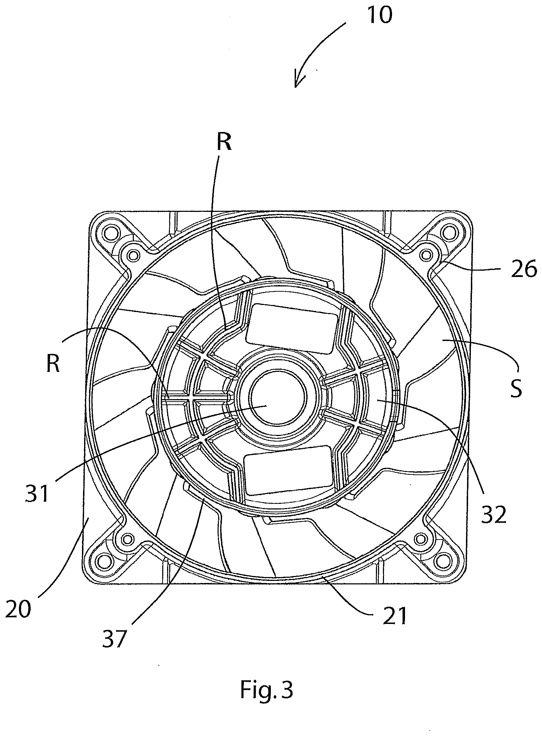

Die Figur 3 stellt eine Aufsicht auf die Ansicht aus Figur 2 dar. Die zentrale Aufnahme 30 des Gehäuses 10 besitzt einen Schaftboden 32 ausbildet und dieser besitzt schaftseitig, somit an der zum Ventilatorrad zugewandten Seite eine asymmetrisch ausgeführte Rippung aus Rippen R.

Es sind in dieser Ausführung mehrere (hier 5) sternförmig angeordneten Stege bzw. Rippen R vorgesehen. Diese mehren Rippen R sind in ihrer Position ungleichmäßig gegenüber einer gedachten mittleren Trennlinie ausgerichtet. Im Schaftboden 32 sind ferner zwei fensterartige Öffnungen in Bereichen ohne Rippung vorgesehen. Diese sind ebenfalls asymmetrisch gegenüber der Nabe 31 orientiert.

Am Schaftboden 32 sind ferner zwei gebogene (teilkreisförmige) Rippen R vorgesehen, die zumindest abschnittsweise radial um die Nabe 31 herum angeordnet sind und die radial angeordneten Rippen R und diese in etwa in deren Mitte bezogen auf deren Längserstreckung kreuzen und sich jeweils beidseitig endseitig bis zur zylindrischen Wandung 37 erstrecken.

Die Herstellung ist so ausgeführt, dass angussseitig am Anguss A und diametral gegenüberliegend (somit auf der Waschbrettseite W) einmal eine Verdickung und einmal ein Teilungssprung vorgesehen sind.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung gemäß den Figuren auch bei grundsätzlich anders gearteten Ausführungen Gebrauch macht.

## Patentansprüche

1. Gehäuse (10), wobei das Gehäuse eine Deckscheibe (20) mit einer zylindrischen Wand (21) und eine zentrale Aufnahme (30) mit einer Nabe (31) zur Lagerung eines Ventilators mit einem Diagonal-Ventilatorrad aufweist, wobei um die Nabe (31) mehrere dreidimensional gekrümmte Luftleitschaufeln (S) angeordnet sind, wobei die Luftleitschaufeln (S) materialschlüssig mit der zylindrischen Wand (21) verbunden sind und hierzu das Gehäuse (10) in einem Arbeitsschritt hergestellt ist und wobei die zentrale Aufnahme (30) des Gehäuses einen Schaftboden (32) ausbildet, **dadurch gekennzeichnet, dass** der Schaftboden (31) schaftseitig, somit an der zum Ventilatorrad zugewandten Seite, mit einer unsymmetrisch ausgeführten Rippung versehen ist, ausgebildet aus sternförmig angeordneten mehreren Stegen oder Rippen (R).

2. Gehäuse (10) nach Anspruch 1, **dadurch gekennzeichnet, dass** dieses sowohl einstückig als auch einteilig ausgebildet ist.

3. Gehäuse (10) nach Anspruch 1 oder 2, **dadurch gekennzeichnet, dass** der eine Arbeitsschritt ein Spritzgussverfahren darstellt, bei dem von einer Angussseite (A) zu einer Waschbrettseite (W) das Gehäuse (10) in einem Spritzvorgang in einem Spritzgusswerkzeug hergestellt wird.

4. Gehäuse (10) nach Anspruch 3, **dadurch gekennzeichnet, dass** angussseitig am Gehäuse (10) eine Materialverdickung (12) vorgesehen ist.

5. Gehäuse (10) nach einem der vorhergehenden Ansprüche 3 oder 4, **dadurch gekennzeichnet, dass** die Herstellung so erfolgt, dass angussseitig am Anguss (A) und diametral gegenüberliegend auf der Waschbrettseite (W) einmal eine Verdickung und einmal ein Teilungssprung vorgesehen ist.

6. Gehäuse (10) nach einem der vorhergehenden Ansprüche, **dadurch gekennzeichnet, dass** die Luftleitschaufeln (S) mit Radien im Übergang an der Innenwand der zylindrischen Wand (21) verbunden sind.

7. Gehäuse (10) nach einem der vorhergehenden Ansprüche, **dadurch gekennzeichnet, dass** die mehren Rippen (R) in ihrer Anzahl ungleichmäßig gegenüber einer gedachten mittleren Trennlinie durch das Gehäuse (10) diametral gegenüberliegend auf beiden Seiten der gedachten mittleren Trennlinie angeordnet sind, wobei bevorzugt auf einer ersten Seite drei Rippen (R) und auf der diametral gegenüberliegenden Seite zwei Rippen (R) vorgesehen sind.

8. Gehäuse (10) nach einem der vorhergehenden Ansprüche, **dadurch gekennzeichnet, dass** im Schaftboden (32) zwei fensterartige Öffnungen in Bereichen ohne Rippung vorgesehen sind.

9. Gehäuse (10) nach einem der vorhergehenden Ansprüche, **dadurch gekennzeichnet, dass** am Schaftboden (32) eine zylindrische, um die Nabe (31) herum verlaufende Wandung (37) vorgesehen ist und die Luftleitschaufeln (S) mit einem Verbindungsabschnitt an der Wandung (37) einstückig verbunden sind.

10. Gehäuse (10) nach einem der vorhergehenden Ansprüche, **dadurch gekennzeichnet, dass** am Schaftboden (32) gebogene Rippen (R) vorgesehen sind, die zumindest abschnittsweise radial um die Nabe (31) herum angeordnet sind und die radial angeordneten Rippen (R), vorzugsweise in etwa in deren Mitte bezogen auf deren Längserstreckung kreuzen.

11. Herstellverfahren zum Herstellen eines Gehäuses (10) nach einem der Ansprüche 1 bis 10, **dadurch gekennzeichnet, dass** das Gehäuse (10) in einem Arbeitsschritt im Spritzgussverfahren in einem Spritzgusswerkzeug hergestellt wurde.

## Claims

1. A housing (10), wherein the housing comprises a cover disk (20) having a cylindrical wall (21) and a central receptacle (30) having a hub (31) for mounting a ventilator having a diagonal ventilator wheel, wherein multiple three-dimensionally curved impeller vanes (S) are arranged around the hub (31), wherein the impeller vanes (S) are connected in a materially-joined manner to the cylindrical wall (21) and the housing (10) is produced in one work step for this purpose and wherein the central receptacle (30) of the housing forms a shaft base (32), **characterized in that** said shaft base (31) this base is provided on the shaft side, thus on the side facing toward the ventilator wheel, with an asymmetrically embodied ribbing, formed from several webs or ribs (R) arranged in a star shape.

2. The housing (10) according to Claim 1, **characterized in that** it is formed both integrally and also in one piece.

3. The housing (10) according to Claim 1 or 2, **characterized in that** the one work step represents an injection molding method, in which the housing (10) is produced in an injection procedure in an injection mold from a sprue side (A) to a washboard side (W).

4. The housing (10) according to Claim 3, **characterized in that** a material thickening (12) is provided on the sprue side on the housing (10).

5. The housing (10) according to one of the preceding claims 3 or 4, **characterized in that** the production is performed in such a way that a thickening is provided once and an indexing jump is provided once, on the sprue side at the sprue (A) and diametrically opposing on the washboard side (W).

6. The housing (10) according to any one of the preceding claims, **characterized in that** the impeller vanes (S) are connected with radii in the transition at the inner wall of the cylindrical wall (21).

7. The housing (10) according to any one of the preceding claims, **characterized in that** the multiple ribs (R) are arranged unevenly in the number thereof in relation to an imaginary middle partition line through the housing (10), diametrically opposing on both sides of the imaginary middle partition line, wherein preferably three ribs (R) are provided on a first side and two ribs (R) are provided on the diametrically opposing side.

8. The housing (10) according to any one of the preceding claims, **characterized in that** two window-like openings are provided in the region without ribbing in the shaft base (32).

9. The housing (10) according to any one of the preceding claims, **characterized in that** a cylindrical wall (37) extending around the hub (31) is provided at the shaft base (32) and the impeller vanes (S) are integrally connected using a connecting section to the wall (37).

10. The housing (10) according to any one of preceding Claims, **characterized in that** curved ribs (R) are provided at the shaft base (32), which are arranged radially around the hub (31) at least in sections and intersect the radially arranged ribs (R), preferably approximately in the middle thereof in relation to the longitudinal extension thereof.

11. A production method for producing a housing (10) according to any one of Claims 1 to 10, **characterized in that** the housing (10) was produced in one work step in the injection molding method in an injection mold.

## Revendications

1. Boîtier (10), le boîtier présentant un disque de recouvrement (20) pourvu d'une paroi cylindrique (21), et un logement central (30) pourvu d'un moyeu (31) servant à loger un ventilateur avec une roue de ventilateur diagonal, dans lequel plusieurs pales déflectrices d'air (S) courbées en trois dimensions sont disposées autour du moyeu (31), dans lequel les pales déflectrices d'air (S) sont reliées à la paroi cylindrique (21) par liaison de matière et à cet effet le boîtier (10) est fabriqué en une seule étape de travail, et dans lequel le logement central (30) du boîtier réalise un fond d'arbre (32),
**caractérisé en ce que** le fond d'arbre (31) est pourvu côté arbre, donc sur le côté tourné vers la roue de ventilateur, d'un nervurage réalisé de manière asymétrique qui est réalisé à partir de plusieurs entretoises ou nervures (R) disposées en étoile.

2. Boîtier (10) selon la revendication 1, **caractérisé en ce qu'**il est réalisé à la fois intégralement et d'une seule pièce.

3. Boîtier (10) selon la revendication 1 ou 2, **caractérisé en ce que** ladite une étape de travail est un procédé de moulage par injection dans lequel le boîtier (10) est fabriqué dans un processus de moulage dans un moule de moulage à injection d'un côté culot (A) à un côté lignes de freinage de goutte (W).

4. Boîtier (10) selon la revendication 3, **caractérisé en ce qu'**un épaississement de matière (12) est prévu sur le boîtier (10) côté culot.

5. Boîtier (10) selon l'une quelconque des revendications précédentes 3 ou 4, **caractérisé en ce que** la fabrication est effectuée de telle sorte que côté culot, au niveau du culot (A) et diamétralement opposé sur le côté lignes de freinage de goutte (W), d'une part un épaississement et d'autre part un saut de division sont prévus.

6. Boîtier (10) selon l'une quelconque des revendications précédentes, **caractérisé en ce que** les pales déflectrices d'air (S) sont reliés par des rayons au niveau de la transition sur la paroi intérieure de la paroi cylindrique (21).

7. Boîtier (10) selon l'une quelconque des revendications précédentes, **caractérisé en ce que** les plusieurs nervures (R) sont disposées en nombre irrégulier par rapport à une ligne séparatrice centrale imaginaire à travers le boîtier (10), de manière diamétralement opposée sur les deux côtés de la ligne séparatrice centrale imaginaire, dans lequel de préférence trois nervures (R) sont prévues sur un premier côté, et deux nervures (R) sont prévues sur le côté diamétralement opposé.

8. Boîtier (10) selon l'une quelconque des revendications précédentes, **caractérisé en ce que** deux ouvertures de type fenêtre sont prévues dans le fond d'arbre (32) dans des zones sans nervurage.

9. Boîtier (10) selon l'une quelconque des revendications précédentes, **caractérisé en ce qu'**une paroi cylindrique (37) s'étendant autour du moyeu (31) est prévue sur le fond d'arbre (32), et les pales déflectrices d'air (S) sont reliées intégralement à la paroi (37) par une partie de liaison.

10. Boîtier (10) selon l'une quelconque des revendications précédentes, **caractérisé en ce que** des nervures courbes (R) sont prévues sur le fond d'arbre (32) qui sont disposées au moins par endroit radialement autour du moyeu (31) et croisent les nervures (R) disposées radialement de préférence approximativement au milieu de celles-ci par rapport à l'étendue longitudinale de celles-ci.

11. Procédé de fabrication permettant de fabriquer un boîtier (10) selon l'une quelconque des revendications 1 à 10, **caractérisé en ce que** le boîtier (10) a été fabriqué dans une étape de travail dans le procédé de moulage par injection dans un moule de moulage à injection.
